# EUROPEAN PATENT SPECIFICATION

(11) **EP 4 382 796 B1**
(45) Date of publication and mention of the grant of the patent: **22.01.2025**
(21) Application number: 23178923.1
(22) Date of filing: 13.06.2023
(51) Int. Cl.: F16M 11/04, F16M 11/10, F16M 11/38, F16M 13/02

(54) **A LIFTING AND ROTATING ELECTRONIC PRODUCT SUPPORT AND PROTECTION DEVICE**
HEBE- UND DREHVORRICHTUNG FÜR ELEKTRONISCHE PRODUKTUNTERSTÜTZUNG UND SCHUTZ
DISPOSITIF DE SUPPORT ET DE PROTECTION DE PRODUIT ÉLECTRONIQUE DE LEVAGE ET DE ROTATION

(30) Priority: 06.12.2022 CN 202223260599 U
(43) Date of publication of application: 12.06.2024
(73) Proprietor: Liu, Fubing, Shenzhen, Guangdong (CN)
(72) Inventor: Liu, Fubing, Shenzhen, Guangdong (CN)
(74) Representative: You Patent

(56) References cited:
- CN-U- 201 897 058
- US-A1- 2015 076 308
- US-A1- 2015 083 615
- US-A1- 2017 293 207
- US-B1- 11 209 870

## Description

### RELATED APPLICATIONS

This application claims the benefit of priority to Chinese Patent Application Number 202223260599.1 filed on December 6, 2022, in the China National Intellectual Property Administration.

### TECHNICAL FIELD

The disclosure relates to the field of electronic product protection devices, in particular to a lifting and rotating electronic product support and protection device.

### BACKGROUND

Known electronic product supporting apparatuses generally include a supporting carrier and a mounting member. The mounting member is fixed on the supporting carrier. When an electronic product is used, the electronic product is configured to be mounted in the mounting member, so that a user can, in a comfortable posture, watch a video or perform an on-line conference or the like by lifting the electronic product to a higher position, without the need for the user to hold the electronic product. However, because the electronic product supporting apparatus cannot adjust the height of the mounting member, the height position of the electronic product cannot be adjusted, thereby causing limitations in conditions such as when a user is watching a video. US 2015/076308 A1 discloses a bracket for supporting a portable electronic device. The bracket includes a base, a housing receiving the portable electronic device and an arm connecting the base with the housing. The arm defines a slot which has a plurality of teeth arranged along a lengthwise direction thereof. A connector extends through the slot of the arm into the housing. The connector has two elastic tabs movably engaging with the teeth to thereby position the housing at different heights of the arm. US 11209870 B1 discloses accessory units for electronic devices. The accessory units can include a panel that has a flexible substrate with a network of structural elements that are arranged to fold the panel into different forms and shapes similar to origami. For example, the panel can be bent along one or more fold lines that are defined by adjacent structural elements. In some cases, the panels are configured to fold at preferred fold lines, sometimes in non-parallel orientations with respect to each other. In one case, the accessory can be unfolded into a flat configuration and serve as a cover for the electronic device. In some cases, the accessory units can be brought behind and support an electronic device at different angles with respect to a support surface. The accessory units can also include features such as keyboards, touch pads, or other input devices for the electronic devices. US 2015/083615 A1 discloses an electronic device, such as a tablet computer, smartphone, or television, which can be mounted to a surface using a magnetic mounting apparatus. In one example, the apparatus can include a protective case that is adapted to receive an electronic device. The protective case can be configured to protect the electronic device from drop-induced damage. The protective case can include a female mounting portion disposed in the protective case. The female mounting portion of the protective case can be configured to magnetically mount to a male mounting portion associated with a folding cover, surface mount, or dock. Once magnetically mounted to the folding cover, surface mount, or dock, the protective case can rotate about the female mounting portion to allow the electronic device to be transitioned from a landscape mode to a portrait mode and vice versa.

### SUMMARY OF INVENTION

The present invention is defined in the appended claims. The flowing disclosure serves a better understanding of the present invention. In order to overcome the shortcomings of the prior art, the purpose of the present disclosure is to provide a lifting and rotating electronic product support and protection device. By means of mounting an electronic product mounting assembly on a supporting carrier in a liftable manner, and locking the electronic product mounting assembly on the supporting carrier by means of a lifting and locking device, the height positions of a mounting member and an electronic product mounted thereon can be adjusted.

The purpose of the disclosure is realized by the following technical solutions:
A lifting and rotating electronic product support and protection device, comprising : a supporting carrier, an electronic product mounting assembly, and a lifting and locking device; wherein the electronic product mounting assembly is configured to be mounted on the supporting carrier in a liftable manner, and the lifting and locking device is configured to lock the electronic product mounting assembly on the supporting carrier; the electronic product mounting assembly comprises a mounting member configured for mounting an electronic product.

The supporting carrier is a foldable protective sleeve, and comprises a backplane body and a surface cover body, and the surface cover body is connected to the backplane body in a foldable manner, and the surface cover body is adapted to selectively convert into an unfolded form when the surface cover body covers the mounting member or a support form when the surface cover body supports the backplane body; and the electronic product mounting assembly is mounted on the backplane body in a liftable manner, and the lifting and locking device is configured to lock the electronic product mounting assembly on the backplane body.

A first transverse folding line is defined in the surface cover body, the surface cover body is divided into a first main cover body and a second main cover body along the first transverse folding line; the second main cover body is provided with a second transverse folding line parallel to the first transverse folding line, and the second main cover body is divided into a first transverse folding portion and a second transverse folding portion along the second transverse folding line, and the first transverse folding portion is located between the first main cover body and the second transverse folding portion; an edge of the first main cover body magnetically attracts an edge of the second transverse folding portion so that the first main cover body, the first transverse folding portion and the second transverse folding portion cooperatively enclose a triangle shape, and two inclined folding lines extending from an end corner of the second main cover body to a middle of the second transverse folding line are further arranged on the second main cover body, and the second main cover body is divided into three triangular folding portion by the two inclined folding lines, and the first main cover body is provided with a centering folding line intersecting with a middle portion of the first transverse folding line, and the first main cover body is divided into two pairs of coupling sections by the centering folding line, wherein one pair of coupling sections magnetically attracts the other pair of coupling sections so that three triangular folding portion of the second main cover body cooperatively enclose an enclosure having a triangular cross-section; the device is configure to hold a tablet computer of a mobile phone.

The electronic product mounting assembly further comprises a lifting base mounted on the supporting carrier in a liftable manner; the lifting and locking device is used to lock the lifting base onto the supporting carrier.

One of the supporting carrier and the lifting base is provided with a lifting mating structure, and the other one of the supporting carrier and the lifting base is provided with the lifting and locking device, and the lifting and locking device comprises a transverse movable cavity, a transverse locking member movably arranged in the transverse movable cavity, and a first spring arranged in the transverse movable cavity and abutting against the transverse locking member; the transverse locking member forms a first insert head, the lifting mating structure comprises a plurality of insert slots sequentially arranged along a lifting direction of the lifting base, and the first insert head is insertable into the insert slots.

The supporting carrier is provided with a lifting guide groove extending in the lifting direction of the lifting base, and the lifting base is mounted in the lifting guide groove in a liftable manner; the two groove side walls of the lifting guide groove are both provided with the lifting mating structure, and the lifting base is provided with two lifting and locking device in one-to-one correspondence with the two lifting mating structures, and the first insert head of the transverse locking member of the lifting and locking device is configured to be inserted into an insert slot of the corresponding lifting mating structure.

The lifting mating structure comprises a plurality of first protruding teeth arranged in sequence along the lifting direction of the lifting base, and an insert slot is formed between any two adjacent first protruding teeth, one end of the first spring is pressed against the cavity wall of a transverse movable cavity, and the other end of the first spring is pressed against a transverse locking member.

the electronic product mounting assembly further comprises a rotating member rotatably mounted on the lifting base, and a rotating and locking device configured for locking the rotating member on the lifting base; and the mounting member is fixed to the rotating member.

One of the lifting base and the rotating member is provided with a rotating mating structure, and the other is provided with the rotating and locking device, and the rotating and locking member comprises a mounting cavity, a movable locking member movably mounted in the mounting cavity, and a second spring arranged in the mounting cavity and abutting against the movable locking member; and the movable locking member is formed with a second insert head the rotating mating structure comprises a plurality of locking slots circumferentially arranged around a rotation axis of the rotating member, the second insert head is insertable into the locking slots.

The rotating mating structure is provided on the rotating member, and the rotating and locking device is provided on the lifting base; the rotating mating structure comprises a plurality of second protruding teeth arranged in a circumferential direction around a rotation axis of the rotating member, and a locking slot is formed between any two adjacent second protruding teeth; one end of the second spring abuts against the cavity wall of the mounting cavity, and the other end thereof abuts against the movable locking member; the mounting member is a protective frame.

Compared with the prior art, the present disclosure has the following beneficial effects:
The present disclosure provides a lifting and rotating electronic product support and protection device. By using a combination of a supporting carrier, an electronic product mounting assembly, and a lifting and locking device, at the same time, the electronic product mounting assembly configured to be mounted on the supporting carrier in a liftable manner, and the electronic product mounting assembly is locked on the supporting carrier via the lifting and locking device, thus, the electronic product mounting assembly can be lifted relative to the supporting carrier, and is locked by the lifting and locking device, so that the height position of the mounting component and the electronic product mounted thereon can be adjusted; furthermore, the rotating member can also be rotated relative to the lifting base, so that the angle of the mounting member and the electronic product mounted thereon can be adjusted, thereby being convenient for flexible use and satisfying various video watching and use requirements of a user. In addition, the rotating adjustment operation and the lifting adjustment operation are both simple and quick, which can save time and help users to quickly complete the adjustment; in addition, a folding protection sleeve is used for the supporting carrier, which can also protect an electronic product.

### BRIEF DESCRIPTION OF DRAWINGS

Fig. 1 is a structure view of the lifting and rotating electronic product support and protection device according to the present disclosure;
Fig. 2 is an exploded view of the lifting and rotating electronic product support and protection device according to the present disclosure;
Fig. 3 is a schematic view showing an assembled view of a rotating member, a lifting base and a supporting frame shown in Fig. 2;
Fig. 4 is an exploded view of the rotating member, the lifting base and the supporting frame shown in Fig. 3;
Fig. 5 is a schematic view of an exploded state of the rotating member, the lifting base and the supporting frame shown in Fig. 4;
Fig. 6 is an enlarged view of part A shown in Fig. 5;
Fig. 7 is an enlarged view of part B in shown in Fig. 5;
Fig. 8 is a schematic assembled view of the lifting base, a rotating and locking device and a lifting and locking device shown in Fig. 3;
Fig. 9 is an exploded view of the lifting base, the rotating and locking device and the lifting and locking device shown in Fig. 8;
Fig. 10 is a schematic view showing an expanded configuration of a surface cover body shown in Fig. 1;

### Reference numerals:

100: supporting carrier; 101: backplane body; 102: lifting guide groove; 103: bottom plate; 104: supporting frame; 110: electronic product mounting assembly; 120: lifting base; 121: clamping ring part; 130: lifting and locking device; 131: transverse locking member; 132: transverse movable cavity; 133: first spring; 140: rotating member; 141: annular convex plate; 142: clamping jaws; 150: rotating and locking device; 151: mounting cavity; 152: movable locking member; 153, second spring; 160. lifting mating structure; 161. insert slot; 162. first protruding teeth; 170. rotating mating structure; 171. locking slot; 172. second protruding teeth;180. surface cover body; 181. first transverse folding line; 182. second transverse folding line; 183. inclined folding line; 184. triangular folding portion;185: center folding line; 186: coupling sections; 190: mounting member.

### DETAILED DESCRIPTION

The present utility model is further described below with reference to the accompanying drawings and specific embodiments. It should be noted that, without conflict, the following embodiments or technical features may form a new embodiment in any combination.

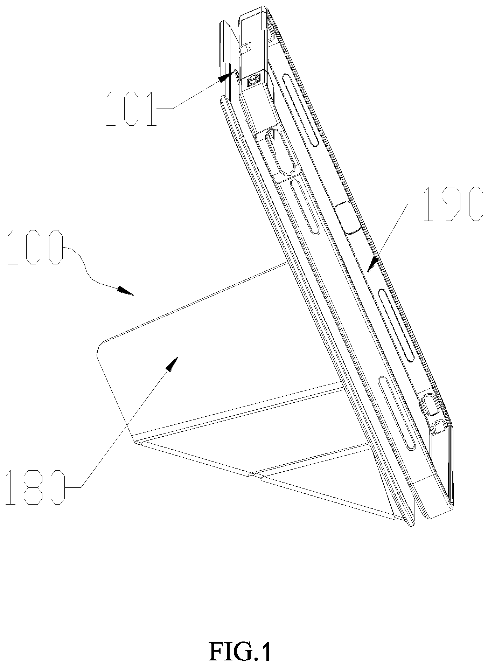

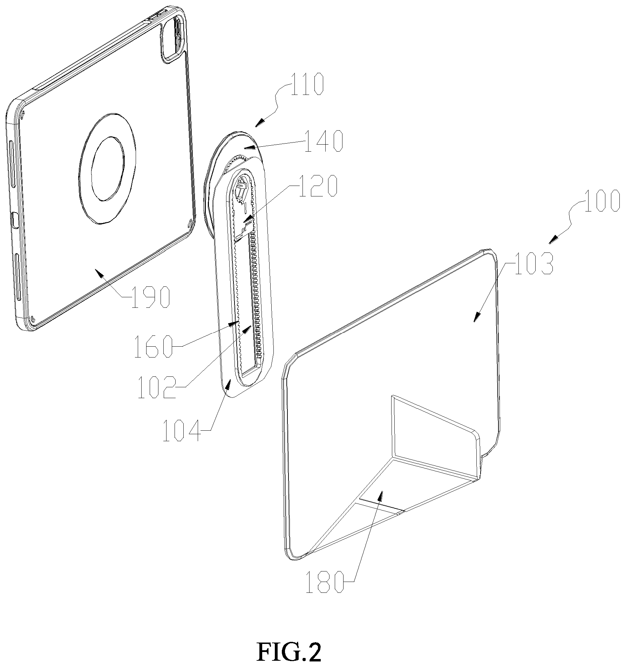

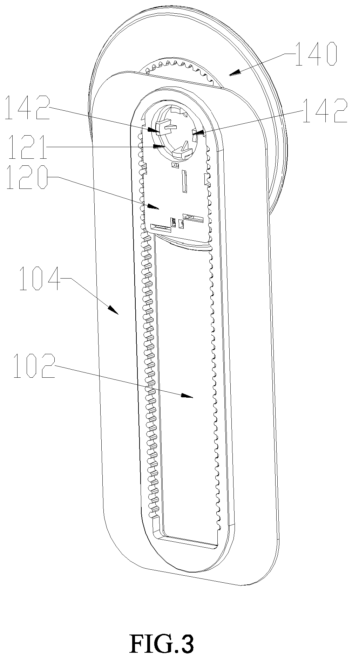

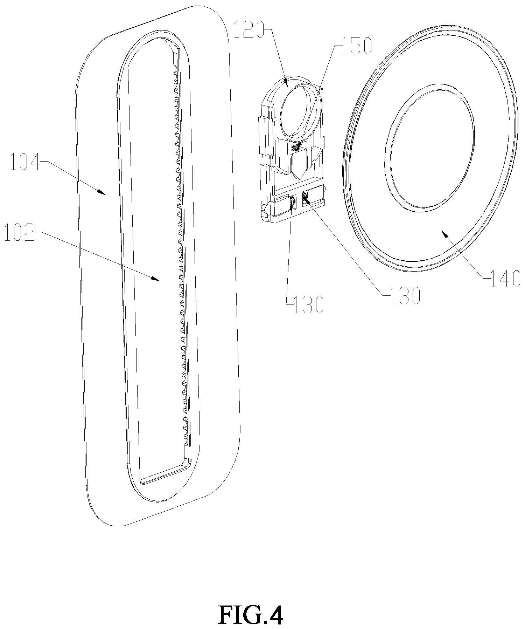

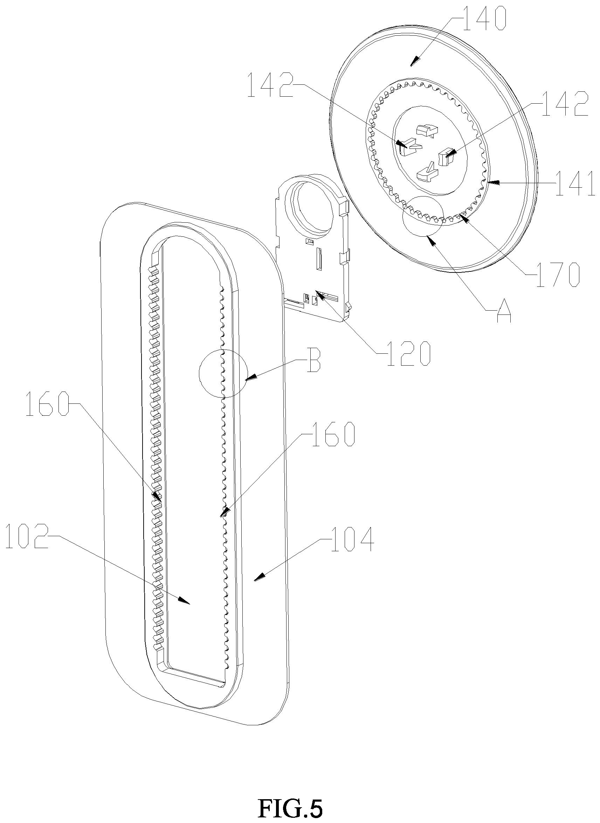

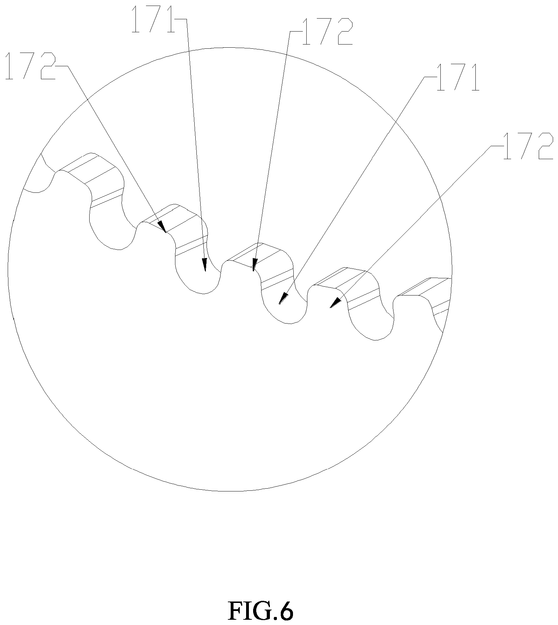

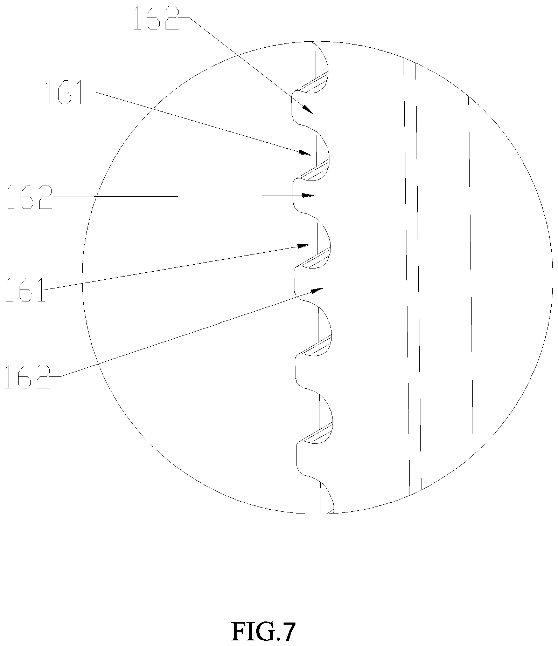

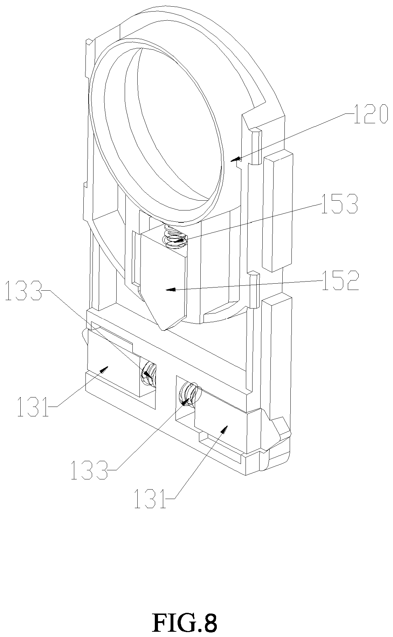

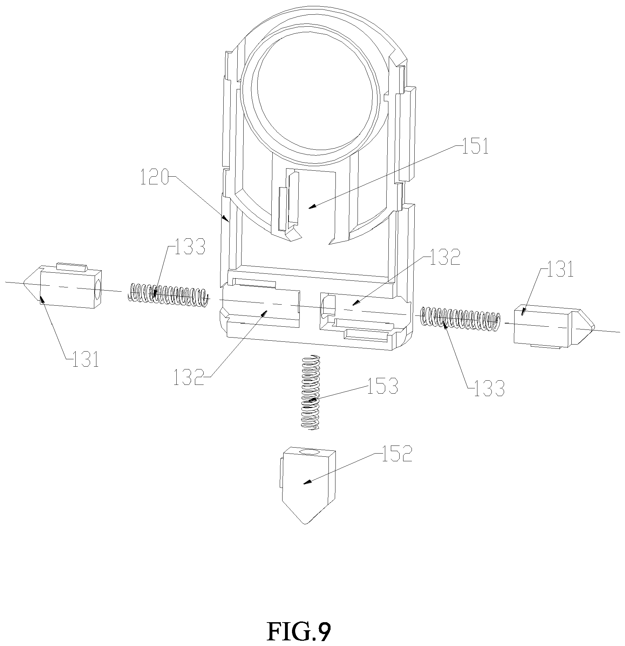

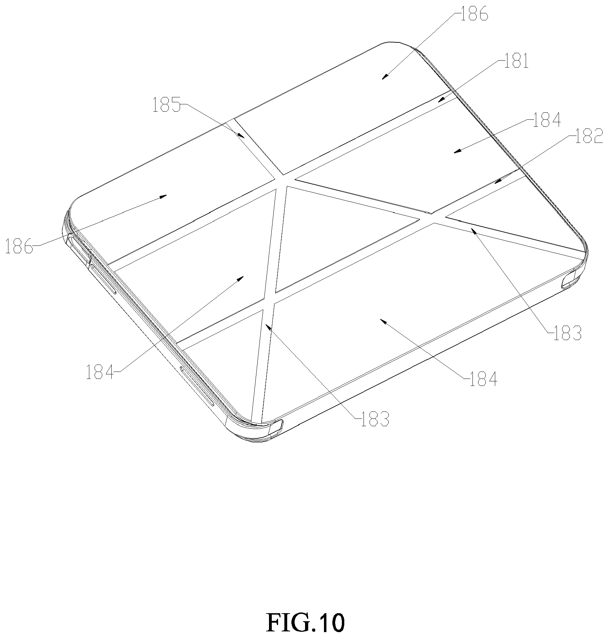

Referring to FIGs. 1 to 10, a lifting and rotating electronic product support and protection device, comprising a supporting carrier 100, an electronic product mounting assembly 110 and a lifting and locking device 130; the electronic product mounting assembly 110 configured to be mounted on the supporting carrier 100 in a liftable manner, and the lifting and locking device 130 is configured to lock the electronic product mounting assembly 110 on the supporting carrier 100; the electronic product mounting assembly 110 has a mounting member 190 for the mounting of electronic products.

When in use, electronic products such as a mobile phone or a tablet computer configured to be mounted on the mounting member 190 of the electronic product mounting assembly 110, and the supporting carrier 100 is placed on a support interface (such as the desktop, worktable, or other support surfaces). If the height position of the electronic product needs to be adjusted, the electronic product mounting assembly 110 can be raised and lowered relative to the supporting carrier 100 and locked by the lifting and locking device 130, thus the height position of the mounting member 190 and the electronic product mounted thereon can be flexibly adjusted according to the height of the support interface, which can improve the experience of watching and using electronic product videos.

The electronic product mounting assembly 110 further comprises a lifting base 120 mounted on the supporting carrier 100 in a liftable manner; the lifting and locking device 130 is used to lock the lifting base 120 onto the supporting carrier 100.

One of the supporting carrier 100 and the lifting base 120 is provided with a lifting mating structure 160, and the other is provided with the lifting and locking device 130, that is to say, if the supporting carrier 100 is provided with the lifting mating structure 160, the lifting base 120 is provided with the lifting and locking device 130; if the supporting carrier 100 is provided with the lifting and locking device 130, the lifting base 120 is provided with a lifting mating structure 160, and the locking can also be achieved.

The lifting and locking device 130 comprises a transverse movable cavity 132, a transverse locking member 131 movably arranged in the transverse movable cavity 132, and a first spring 133 arranged in the transverse movable cavity 132 and abutting against the transverse locking member 131; the transverse locking member 131 forms a first insert head, the lifting mating structure 160 comprises a plurality of insert slots 161 sequentially arranged along the lifting direction of the lifting base 120, and the insert slots 161 are used for inserting the first insert head. When in use, by lifting the lifting base 120 to different height positions, the first insert head of the transverse locking member 131 can be inserted in different insert slots 161 to lock the lifting base 120 at different height positions. By using the structure of the lifting and locking device 130 and the lifting mating structure 160, locking can be achieved, and lifting adjustment is facilitated.

Specifically, the lifting mating structure 160 comprises a plurality of first protruding teeth 162 arranged in sequence along the lifting direction of the lifting base 120, and an insert slot 161 is formed between any two adjacent first protruding teeth 162, thereby facilitating the formation of the insert slot 161.

As a preferred embodiment of the disclosure, the supporting carrier 100 is provided with a lifting guide groove 102 extending in the lifting direction of the lifting base 120, and the lifting base 120 is mounted in the lifting guide groove 102 in a liftable manner, and the two groove side walls of the lifting guide groove 102 are both provided with the lifting mating structure 160, and the lifting base 120 is provided with two lifting and locking device 130 in one-to-one correspondence with the two lifting mating structures 160, and the first insert head of the transverse locking member 131 of the lifting and locking device 130 is configured to be inserted into the insert slot 161 of the corresponding lifting mating structure 160. By adopting the described structure, the locking stability of the lifting base 120 can also be improved.

Specifically, one end of the first spring 133 is pressed against the cavity wall of the transverse movable cavity 132, and the other end of the first spring 133 is pressed against the transverse locking member 131. Of course, in addition, a gasket or the like may be provided in the transverse movable cavity 132, and the end of the first spring 133 away from the transverse locking member 131 is pressed against a component such as the gasket or the like.

The electronic product mounting assembly 110 further comprises a rotating member 140 rotatably mounted on the lifting base 120, and a rotating and locking device 150 configured for locking the rotating member 140 on the lifting base 120; and the mounting member 190 is fixed to the rotating member 140. When in use, the rotating member 140 can also rotate relative to the lifting base 120, and is locked by the rotating and locking device 150, thus, the angle of the electronic product mounted on the mounting member 190 can be adjusted. In addition to having a lifting function, the electronic product protection device also has a rotating function, and can adjust the angle and height positions of the electronic product mounted on the mounting member 190, and it is convenient for flexible use, and meets various video watching and use requirements of users.

One of the lifting base 120 and the rotating member 140 is provided with a rotating mating structure 170, and the other is provided with the rotating and locking device 150, that is to say, if the lifting 120 is provided with the rotating mating structure 170, the rotating member 140 is provided with the rotating and locking device 150; if the lifting base 120 is provided with the rotating and locking device 150, the rotating member 140 is provided with the rotating matching structure 170, and the locking can also be achieved.

The rotating and locking device 150 comprises a mounting cavity 151, a movable locking member 152 movably mounted in the mounting cavity 151, and a second spring 153 arranged in the mounting cavity 151 and abutting against the movable locking member 152; and the movable locking member 152 is formed with a second insert head. The rotating mating structure 170 comprises a plurality of locking slots 171 circumferentially arranged around a rotation axis of the rotating member 140. The locking slots 171 are used for inserting the second insert head. When in use, by rotating the rotating member 140 to different angles, the second insert head of the movable locking member 152 can be inserted into different locking slots 171, so that the rotating member 140 can be locked at different angles. By using the described structure of the rotation locking apparatus 150 and the rotating mating structure 170, locking can be achieved, and the rotation adjustment operation is facilitated.

Preferably, the rotating mating structure 170 comprises a plurality of second protruding teeth 172 arranged along a circumference around the rotation axis of the rotating member 140, and a locking slot 171 is formed between any two adjacent second protruding teeth 172, so as to facilitate the formation of the locking slot 171.

As a preferred embodiment of the disclosure, the rotating mating structure 170 is arranged on the rotating member 140, and the rotating and locking device 150 is arranged on the lifting base 120. Specifically, the rotating member 140 is provided with an annular convex plate 141 protruding outward, and the rotating matching structure 170 is formed on the annular convex plate 141.

The rotating member 140 is provided with several clamping jaws 142 arranged around the rotating axis thereof in a circumferential direction, the lifting base 120 is provided with a clamping ring part 121, and the rotating member 140 is rotatably mounted on the clamping ring part 121 via the several clamping jaws 142. Thus, by means of the described structure, the rotating member 140 is rotatably mounted on the lifting base 120, and the mounting of the rotating member 140 is facilitated. Certainly, in addition, the rotating member 140 may also be rotatably mounted on the lifting base 120 through other structures such as a pivot, but the rotating member 140 may be rotatably mounted on the clasp portion 121 through the clamping jaws 142, which is the most preferred implementation of the present disclosure and facilitates the mounting of the rotating member 140.

One end of the second spring 153 abuts against the cavity wall of the mounting cavity 151, and the other end thereof abuts against the movable locking member 152. Certainly, in addition, a gasket or the like may be provided in the mounting cavity 151, and one end of the second spring 153 away from the movable locking member 152 abuts against a component such as the gasket or the like.

The mounting member 190 is a protective frame. Certainly, in addition to the protective frame, the mounting piece 190 may also be a fastening bracket, and so on, as long as the mounting member 190 can be used for mounting an electronic product. However, using the protective frame for the mounting member 190 is the most preferred implementation of the present disclosure, providing protection for the mounting of the electronic product and reducing costs. In order to further optimize the performance thereof, the mounting member 190 may also be formed with an accommodating groove for an electronic pen to be placed thereon, wherein the accommodating cavity may be directly formed on the mounting member 190 by means of processing, and the mounting member 190 may also be formed by using a main frame body and a drawing cover connected to the main frame body in a drawing manner, and the accommodating groove may be enclosed by the main frame body and the drawing cover.

The electronic product may be a tablet computer, a mobile phone, or the like.

In the present embodiment, the supporting carrier 100 is a foldable protective sleeve, and comprises a backplane body 101 and a surface cover body 180, wherein the surface cover body 180 is connected to the backplane body 101 in a foldable manner, and the surface cover body 180 is adapted to selectively convert into an unfolded form for covering a mounting member 190 or a support form for supporting the backplane body 101; and the electronic product mounting assembly 110 is mounted on the backplane body 101 in a liftable manner, and the lifting and locking device 130 is used to lock the electronic product mounting assembly 110 on the backplane body 101. During storage of the electronic product, the surface cover body 180 can be converted into an unfolded state, and the surface cover body 180 covers the mounting member 190, so as to protect an electronic product, and when the electronic product is used to watch a video or perform an on-line conference, etc., the surface cover body 180 can be folded to the back of the backplane body 101, and the surface cover body 180 is converted into a supporting form and is used for supporting the backplane body 101, so as to facilitate a user to use an electronic product to watch a video, to perform an on-line conference, etc. Specifically, the electronic product mounting assembly 110 is mounted on the backplane body 101 in a liftable manner; and the lifting and locking device 130 is configured to lock the electronic product mounting assembly 110 on the backplane body 101. The backplane body 101 comprises a bottom plate 103 and a supporting frame 104 fixed on the bottom plate 103. The lifting guide groove 102 and the lifting mating structure 160 are both formed on the supporting frame 104. Of course, in addition, the backplane body 101 may also adopt other structures such as a thickened plate body.

Certainly, in addition to the foldable protective sleeve, the supporting carrier 100 may also be a supporting frame, a support seat, and so on, as long as the supporting carrier 100 can serve a supporting function; however, the supporting carrier 100 using the foldable protective sleeve is the most preferred embodiment of the present disclosure, serving a supporting function and a protective function at the same time.

The surface cover body 180 may adopt various existing surface cover structures, as long as it is adapted to selectively convert into an unfolded state for covering the mounting member 190 or a supporting state for supporting the backplane body 101. For example, a double-folded cover plate having a fastening fit and an adjustable angle between the two may be used, or the face cover body 180 may comprise a first stacked plate, a second stacked plate and a third stacked plate which are successively and turnably connected, when the surface cover body 180 is in an unfolded state, the first stacked plate, the second stacked plate and the third stacked plate are arranged as a flat plate, to fully cover the mounting member 190; when the surface cover body 180 is in a supporting state, the edges of the third stacked plate and the edges of the first stacked plate are magnetically attracted to allow the first stacked plate, the second stacked plate and the third stacked plate to form a triangle. As the most preferred embodiment of the disclosure, a first transverse folding line 181 is defined in the surface cover body 180. The surface covering 180 is divided into a first main cover body and a second main cover body along the first transverse folding line 181, and the second main cover body is provided with a second transverse folding line 182 parallel to the first transverse folding line 181. The second transverse folding line 182 divides the second main cover body into a first transverse folding portion and a second transverse folding portion, the first transverse folding portion is located between the first main cover body and the second transverse folding portion; the first main cover body edge is used for magnetically attracting the second transverse folding portion edge so that the first main cover body, the first transverse folding portion and the second transverse folding portion enclose a triangle shape. Two inclined folding lines 183 extending from an end corner of the second main cover body to the middle of the first transverse folding line 181 are also arranged on the second main cover body, and the second main cover body is divided into three triangular folding portion 184 by the two inclined folding lines 183. The first main cover body is provided with a centering folding line 185 intersecting with a middle portion of the first transverse folding line 181. The first main cover body is divided into two pairs of coupling sections 186 by the centering folding line 185, wherein one pair of coupling sections 186 is used for magnetically attracting the other pair of coupling sections 186 so that three triangular folding portion 184 of the second main cover body enclose an enclosure with a triangular cross-section. When in use, the first main cover body and the second main cover body are arranged as plate bodies having a linear extending direction, and in this case, the surface cover body 180 is in an unfolded state, and can cover the mounting member 190 completely; by magnetically attracting the edges of the first main cover body and the edges of the second transverse folding portion, the first main cover body, the first transverse folding portion and the second transverse folding portion enclose a triangle shape, and in this case, the surface cover body 180 is in a supporting form and can be used to support the backplane body 101. In addition, the two coupling sections 186 can also magnetically absorb each other, so that three triangular folding portion 184 of the second main cover body enclose an enclosure, and in this case, the surface cover body 180 is also in a supporting form, and can be used to support the backplane body 101. Accordingly, by means of the described structure of the surface cover body 180, two different support modes can be folded, so that different support modes can be selected according to usage requirements, thereby being more convenient to use flexibly.

The actual lifting rotation adjustment process of the present disclosure is as follows: if the lifting adjustment is required, firstly apply sufficient thrust to the mounting member 190 to make the lifting base 120 lift and fall along the lifting guide groove 102. During the lifting of the lifting base 120, the transverse locking member 131 can press the first spring 133 to retract towards the interior of the transverse movable cavity 132 under the effect of the abutting of the first protruding teeth 162, and then it can cross the first protruding teeth 162. After the electronic product mounting assembly 110 is lifted in place, the transverse locking member 131 resets under the elastic force of the first spring 133 and is inserted into the corresponding insert slot 161 by using the first insert head, so as to quickly complete the lifting adjustment. If rotation adjustment is required, a rotation thrust is applied to the mounting member 190 to rotate the rotating member 140 relative to the lifting base 120. During the rotation of the rotating member 140, the movable locking member 152 can press the second spring 153 to retract towards the mounting cavity 151 under the effect of the abutting of the second protruding teeth 172, and then it can cross the second protruding teeth 172.After the mounting member 190 is rotated into place, the movable locking member 152 is reset under the action of the elastic force of the second spring 153 and is embedded into the corresponding locking slot 171 using the second insert head, Thus, the rotation adjustment can be completed quickly.

The above embodiments are only preferred embodiments of the present disclosure, and cannot limit the scope of protection of the present disclosure. Any substantive change and replacement made by a person skilled in the art on the basis of the present disclosure belongs to the scope of protection of the present disclosure.

## Claims

1. A device configure to lifting and rotating electronic product device, the device comprising: a supporting carrier (100), an electronic product mounting assembly (110), and a lifting and locking device (130); wherein the electronic product mounting assembly (110) is configured to be mounted on the supporting carrier (100) in a liftable manner, and the lifting and locking device (130) is configured to lock the electronic product mounting assembly (110) on the supporting carrier (100); the electronic product mounting assembly (110) comprises a mounting member (190) configured for mounting an electronic product;
wherein the electronic product mounting assembly (110) further comprises a lifting base (120) mounted on the supporting carrier (100) in a liftable manner; the lifting and locking device (130) is configured to lock the lifting base (120) onto the supporting carrier (100);
wherein one of the supporting carrier (100) and the lifting base (120) is provided with a lifting mating structure (160), and the other one of the supporting carrier (100) and the lifting base (120) is provided with the lifting and locking device (130), **characterized in that** the lifting and locking device (130) comprises a transverse movable cavity (132), a transverse locking member (131) movably arranged in the transverse movable cavity (132), and a first spring (133) arranged in the transverse movable cavity (132) and abutting against the transverse locking member (131); the transverse locking member (131) forms a first insert head, the lifting mating structure (160) comprises a plurality of insert slots (161) sequentially arranged along a lifting direction of the lifting base (120), and the first insert head is insertable into the insert slots (161).

2. The device according to claim 1, wherein the supporting carrier (100) is a foldable protective sleeve, and comprises a backplane body (101) and a surface cover body (180), and the surface cover body (180) is connected to the backplane body (101) in a foldable manner, and the surface cover body (180) is adapted to selectively convert into an unfolded form when the surface cover body (180) covers the mounting member (190) or a support form when the surface cover body (180) supports the backplane body (101); and the electronic product mounting assembly (110) is mounted on the backplane body (101) in a liftable manner, and the lifting and locking device (130) is configured to lock the electronic product mounting assembly (110) on the backplane body (101).

3. The device according to claim 2, wherein a first transverse folding line (181) is defined in the surface cover body (180), the surface cover body (180) is divided into a first main cover body and a second main cover body along the first transverse folding line (181); the second main cover body is provided with a second transverse folding line (182) parallel to the first transverse folding line (181), and the second main cover body is divided into a first transverse folding portion and a second transverse folding portion along the second transverse folding line (182), and the first transverse folding portion is located between the first main cover body and the second transverse folding portion.

4. The device according to claim 3, wherein an edge of the first main cover body magnetically attracts an edge of the second transverse folding portion so that the first main cover body, the first transverse folding portion and the second transverse folding portion cooperatively enclose a triangle shape.

5. The device according to claim 4, wherein two inclined folding lines (183) extending from an end corner of the second main cover body to a middle of the second transverse folding line (182) are further arranged on the second main cover body, and the second main cover body is divided into three triangular folding portions (184) by the two inclined folding lines (183), and the first main cover body is provided with a centering folding line (185) intersecting with a middle portion of the first transverse folding line (181).

6. The device according to claim 5, wherein the first main cover body is divided into two pairs of coupling sections (186) by the centering folding line (185), wherein one pair of coupling sections (186) magnetically attracts the other pair of coupling sections (186) so that three triangular folding portions (184) of the second main cover body cooperatively enclose an enclosure having a triangular cross-section; the device is configured to hold a tablet computer or a mobile phone.

7. The device according to claim 1, wherein the supporting carrier (100) is provided with a lifting guide groove (102) extending in the lifting direction of the lifting base (120), and the lifting base (120) is mounted in the lifting guide groove (102) in a liftable manner; the two groove side walls of the lifting guide groove (102) are both provided with the lifting mating structure (160), and the lifting base (120) is provided with two lifting and locking device (130) in one-to-one correspondence with the two lifting mating structures (160), and the first insert head of the transverse locking member (131) of the lifting and locking device (130) is configured to be inserted into the insert slot (161) of the corresponding lifting mating structure (160).

8. The device according to claim 1, wherein the lifting mating structure (160) comprises a plurality of first protruding teeth (162) arranged in sequence along the lifting direction of the lifting base (120), and an insert slot (161) is formed between any two adjacent first protruding teeth (162), one end of the first spring (133) is pressed against a cavity wall of a transverse movable cavity (132), and the other end of the first spring (133) is pressed against a transverse locking member (131).

9. The device according to claim 1, wherein the electronic product mounting assembly (110) further comprises a rotating member (140) rotatably mounted on the lifting base (120), and a rotating and locking device (150) configured for locking the rotating member (140) on the lifting base (120); and the mounting member (190) is fixed to the rotating member (140).

10. The device according to claim 9, wherein one of the lifting base (120) and the rotating member (140) is provided with a rotating mating structure (170), and the other one of the lifting base (120) and the rotating member (140) is provided with the rotating and locking device (150), and the rotating and locking device (150) comprises a mounting cavity (151), a movable locking member (152) movably mounted in the mounting cavity (151), and a second spring (153) arranged in the mounting cavity (151) and abutting against the movable locking member (152), wherein the movable locking member (152) is formed with a second insert head, the rotating mating structure (170) comprises a plurality of locking slots (171) circumferentially arranged around a rotation axis of the rotating member (140), the second insert head is insertable into the locking slots (171).

11. The according to claim 10, wherein the rotating mating structure (170) is provided on the rotating member (140), and the rotating and locking device (150) is provided on the lifting base (120); the rotating mating structure (170) comprises a plurality of second protruding teeth (172) arranged in a circumferential direction around a rotation axis of the rotating member (140), and a locking slot (171) is formed between any two adjacent second protruding teeth (172); one end of the second spring (153) abuts against the cavity wall of the mounting cavity (151), and the other end thereof abuts against the movable locking member (152); the mounting member (190) is a protective frame.

## Patentansprüche

1. Elektroproduktspezifische Hebe- und Drehvorrichtung, umfassend einen Stützträger (100), eine Elektroprodukt-Montageeinheit (110) und eine Hebe- und Verriegelungseinheit (130),
wobei die Elektroprodukt-Montageeinheit (110) mit einem Montageelement (190) zur Montage elektronischer Produkte versehen ist und auf dem Stützträger (100) anhebbar angebracht ist, bzw. durch die Hebe- und Verriegelungseinheit (130) an den Stützträger (100) verriegelt werden kann,
wobei die Elektroprodukt-Montageeinheit (110) ferner einen Hubsockel (120) umfasst, der auf dem Stützträger (100) anhebbar angebracht ist und durch die Hebe- und Verriegelungseinheit (130) an den Stützträger (100) verriegelt werden kann,
wobei entweder der Stützträger (100) oder der Hubsockel (120) mit einem Hubgegenstück (160) versehen ist und dann der Hubsockel (120) oder der Stützträger (100) hingegen mit einer Hebe- und Verriegelungseinheit (130) versehen ist, was **dadurch gekennzeichnet ist, dass** die Hebe- und Verriegelungseinheit (130) einen querverlaufenden, beweglichen Hohlraum (132), ein innerhalb des Hohlraums (132) bewegliches Querverriegelungselement (131) und ein erstes Federelement (133) umfasst, wobei das erstes Federelement (133) in dem Hohlraum (132) eingesetzt ist und an dem Querverriegelungselement (131) anliegt, während das Querverriegelungselement (131) einen ersten Einsatzkopf bildet und das Hubgegenstück (160) dementsprechend mit mehreren Einsatzschlitzen (161) ausgebildet ist, welche entlang einer Heberichtung des Hubsockels (120) aufeinanderfolgend ausgelegt sind, wobei der erste Einsatzkopf in die einzelnen Einsatzschlitze (161) einrasten kann.

2. Hebe- und Drehvorrichtung nach Anspruch 1, **dadurch gekennzeichnet, dass** der Stützträger (100) als eine faltbare Schutzhülle bzw. mit einem Rückwandkörper (101) und einem Oberflächenabdeckkörper (180) ausgebildet ist, wobei der Oberflächenabdeckkörper (180) mit dem Rückwandkörper (101) faltbar verbunden ist und zudem so ausgestaltet ist, sich entweder beim durch den Oberflächenabdeckkörper (180) abgedeckten Montageelement (190) auf eine ungefaltete Form, oder beim durch den Oberflächenabdeckkörper (180) abgestützten Rückwandkörper (101) auf ein Stützelement verwandeln zu lassen, wobei die Elektroprodukt-Montageeinheit (110) anhebbar an der Rückwandkörper (101) angebracht ist, bzw. durch die Hebe- und Verriegelungseinheit (130) an die Rückwandkörper (101) verriegelt werden kann.

3. Hebe- und Drehvorrichtung nach Anspruch 2, **dadurch gekennzeichnet, dass** in dem Oberflächenabdeckkörper (180) eine erste Querfaltlinie (181) definiert ist, entlang deren der Oberflächenabdeckkörper (180) in einen ersten Hauptabdeckkörper und einen zweiten Hauptabdeckkörper aufgeteilt ist, wobei in dem zweiten Hauptabdeckkörper auch eine zweite Querfaltlinie (182) parallel zu der ersten Querfaltlinie (181) definiert ist, entlang deren der zweite Hauptabdeckkörper in einen ersten Querfaltabschnitt und einen zweiten Querfaltabschnitt aufgeteilt ist, wobei der erste Querfaltabschnitt zwischen dem ersten Hauptabdeckkörper und dem zweiten Querfaltabschnitt verläuft.

4. Hebe- und Drehvorrichtung nach Anspruch 3, **dadurch gekennzeichnet, dass** eine Kante des ersten Hauptabdeckkörpers eine Kante des zweiten Querfaltteils magnetisch anziehen kann, so dass der erste Hauptabdeckkörper, der erste Querfaltteil und der zweite Querfaltteil ein Dreieck bilden.

5. Hebe- und Drehvorrichtung nach Anspruch 4, **dadurch gekennzeichnet, dass** in dem zweiten Hauptabdeckkörper zwei sich von einer Endecke des zweiten Hauptabdeckkörpers zu der Mitte der zweiten Querfaltlinie (182) erstreckende Faltlinien (183) angeordnet sind, welche den zweiten Hauptabdeckkörper in drei dreieckige Faltabschnitte (184) aufteilen, während der erste Hauptabdeckkörper mit einer Zentrierfaltlinie (185) versehen ist, die sich mit einem mittleren Abschnitt der ersten Querfaltlinie (181) schneidet.

6. Hebe- und Drehvorrichtung nach Anspruch 5, **dadurch gekennzeichnet, dass** der erste Hauptabdeckkörper durch die Zentrierfaltlinie (185) in zwei Paare Koppelsabschnitte (186) aufgeteilt ist, wobei ein Paar Koppelsabschnitte (186) das andere Paar Koppelsabschnitte (186) magnetisch anziehen kann, so dass die drei dreieckige Faltabschnitte (184) des zweiten Hauptabdeckkörpers ein Gehäuse mit einem dreieckigen Querschnitt bilden, so dass die Hebe- und Drehvorrichtung einen Tablet PC oder ein Mobiltelefon tragen kann.

7. Hebe- und Drehvorrichtung nach Anspruch 1, **dadurch gekennzeichnet, dass** der Stützträger (100) mit einer Führungsnut (102) ausgebildet ist, die sich in die Heberichtung des Hubsockels (120) erstreckt, wo der Hubsockel (120) anhebbar angebracht ist und deren beide Seitenwände jeweils mit einem Hubgegenstück (160) ausgebildet sind, während der Hubsockel (120) mit zwei Hebe- und Verriegelungseinheiten (130) entsprechend der beiden einzelnen Hubgegenstücke (160) versehen ist, wobei der erste Einsatzkopf des Querverriegelungselements (131) der Hebe- und Verriegelungseinheit (130) so ausgestaltet ist, in den Einsatzschlitz (161) eines entsprechenden Hubgegenstücks (160) einrasten zu können.

8. Hebe- und Drehvorrichtung nach Anspruch 1, **dadurch gekennzeichnet, dass** das Hubgegenstück (160) mit mehreren in der Heberichtung des Hubsockels (120) sequentiell hervorstehenden ersten Zähnen (162) versehen ist, wobei ein Einsatzschlitz (161) zwischen zwei beliebigen benachbarten ersten Zähnen (162) ausgebildet ist, wobei ein Ende des ersten Federelements (133) gegen eine Hohlraumwand eines Hohlraums (132) drücken, und das andere Ende des ersten Federelements (133) gegen ein Verriegelungselement (131) drücken kann.

9. Hebe- und Drehvorrichtung nach Anspruch 1, **dadurch gekennzeichnet, dass** die Elektroprodukt-Montageeinheit (110) ferner ein Drehelement (140), welches drehbar an dem Hubsockel (120) angebracht ist, und eine Dreh- und Verriegelungseinheit (150) zum Verriegeln des Drehelements (140) an dem Hubsockels (120) umfasst, wobei das Montageelement (190) an dem Drehelement (140) befestigt ist.

10. Hebe- und Drehvorrichtung nach Anspruch 9, **dadurch gekennzeichnet, dass** entweder der Hubsockel (120) oder das Drehelement (140) mit einem Drehgegenstück (170) versehen ist und daraufhin das Drehelement (140) oder der Hubsockel (120) hingegen mit einer Dreh- und Verriegelungseinheit (150) versehen ist, wobei die Dreh- und Verriegelungseinheit (150) einen Montagehohlraum (151), ein innerhalb des Hohlraums (151) beweglich angebrachtes Verriegelungselement (152) und ein zweites Federelement (153) umfasst, wobei das zweites Federelement (133) im Hohlraum (151) eingesetzt ist und an dem Verriegelungselement (152) anliegt, während das bewegliche Verriegelungselement (152) mit einem zweiten Einsatzkopf ausgebildet ist und das Drehgegenstück (170) dementsprechend mit mehreren Verriegelungsschlitzen (171) ausgebildet ist, welche entlang der Umfangsrichtung um eine Drehachse des Drehelements (140) herum ausgelegt sind, wobei der zweite Einsatzkopf in die einzelnen Verriegelungsschlitze (171) einrasten kann.

11. Hebe- und Drehvorrichtung nach Anspruch 10, **dadurch gekennzeichnet, dass** das Drehgegenstück (170) an dem Drehelement (140) angebracht ist, während die Dreh- und Verriegelungseinheit (150) an dem Hubsockel (120) angebracht ist, wobei das Drehgegenstück (170) mit mehreren hervorstehenden zweiten Zähnen (172) ausgebildet ist, die entlang der Umfangsrichtung um eine Drehachse des Drehelements (140) herum ausgelegt sind, wobei ein Verriegelungsschlitz (171) zwischen zwei beliebigen benachbarten zweiten Zähnen (172) ausgebildet ist, wobei ein Ende des zweiten Federelements (153) gegen eine Hohlraumwand des Montagehohlraums (151) drücken, und das andere Ende des zweiten Federelements (153) gegen das Verriegelungselement (152) drücken kann, wobei das Montageelement (190) als ein Schutzrahmen ausgebildet ist.

## Revendications

1. Un appareil de levage et de rotation du produit électronique, comprenant : un support(100), un ensemble de montage de produit électronique (100) et un dispositif de levage et de verrouillage (130) ; dans lequel l'ensemble de montage de produit électronique (110) est configuré pour être monté sur le support (100) de manière relevable, et le dispositif de levage et de verrouillage (130) est configuré pour verrouiller l'ensemble de montage électronique du produit (110) sur le support (100) ; l'ensemble de montage de produit électronique (110) comprend un élément de montage ( 190) configuré pour monter un produit électronique ;
dans lequel l'ensemble de montage de produit électronique (110) comprend en outre une base de levage ( 120) montée sur le support (100) de manière relevable ; le dispositif de levage et de verrouillage ( 130) est configuré pour verrouiller la base de levage (120) sur le support (100) ;
dans lequel l'un du support (100) et de la base de levage (120) est pourvu d'une structure d'accouplement de levage (16), et l'autre du support (100) et de la base de levage (120) est pourvu d'un dispositif de levage et de verrouillage (130), **caractérisé en ce que**
le dispositif de levage et de verrouillage ( 130) comprend une cavité mobile transversale (132), un élément de verrouillage transversal (131) disposé de manière mobile dans la cavité mobile transversale (132) et un premier ressort (133) disposé dans la cavité mobile transversale (132) et butant contre l'élément de verrouillage transversal (131) ; l'élément de verrouillage transversal (131) forme une première tête d'insertion, la structure d'accouplement de levage ( 160) comprend plusieurs rainures d'insertion (161) disposées séquentiellement le long d'une direction de levage de la base de levage (120), et la première tête d'insertion est insérable dans les rainures d'insertion (161).

2. Un appareil selon la revendication 1, dans lequel le support ( 100) est un manchon de protection pliable, comprend un corps de fond de panier ( 101) et un corps de couverture de surface (180), et le corps de couverture de surface (180) est relié au corps de fond de panier (101) de manière pliable, le corps de couverture de surface (180) est adapté pour être converti sélectivement en une forme dépliée lorsque le corps de couverture de surface ( 180) recouvre l'élément de montage ( 190) ou en une forme de support lorsque le corps de couverture de surface (180) supporte le corps de fond de panier ( 101 ) ; l'ensemble de montage de produit électronique (110) est monté sur le corps de fond de panier (101) de manière relevable, et le dispositif de levage et de verrouillage (130) est configuré pour verrouiller l'ensemble de montage de produit électronique (110) sur le corps de fond de panier (101).

3. Un appareil selon la revendication 2, dans lequel une première ligne de pliage transversale ( 181) est définie dans le corps de couverture de surface ( 180), le corps de couverture de surface ( 180) est divisé en un premier corps de couverture principal et un deuxième corps de couverture principal le long de la première ligne de pliage transversale ( 181 ) ; le deuxième corps de couverture principal est pourvu d'une deuxième ligne de pliage transversale (182) parallèle à la première ligne de pliage transversale ( 181 ), et le deuxième corps de couverture principal est divisé en une première partie de pliage transversal et une deuxième partie de pliage transversal le long de la deuxième ligne de pliage transversale ( 182), la première partie de pliage transversale est située entre le premier corps de couverture principal et la deuxième partie de pliage transversal.

4. Un appareil selon la revendication 3, dans lequel un bord du premier corps de couverture principal attire magnétiquement un bord de la deuxième partie de pliage transversal de sorte que le premier corps de couverture principal, la première partie de pliage transversal et la deuxième partie de pliage transversal entourent de manière coopérative pour former une forme triangulaire.

5. Un appareil selon la revendication 4, dans lequel deux lignes de pliage inclinées ( 183) s'étendant d'un angle d'extrémité du deuxième corps de couverture principal au milieu de la deuxième ligne de pliage transversale (182) sont disposées sur le deuxième corps de couverture principale, et le deuxième corps de couverture principal est divisé en trois parties de pliage triangulaires (184) par les deux lignes de pliage médianes (183), et le premier corps de couverture principal est pourvu d'une ligne de pliage médiane (185) intersectant avec une partie médiane de la première ligne de pliage transversale ( 181 ).

6. Un appareil selon la revendication 5, dans lequel le premier corps de couverture principal est divisé en deux paires de section d'accouplement ( 186) par la ligne de pliage médiane ( 185), dans lequel une paire de section d'accouplement ( 186) attire magnétiquement l'autre paire de section d'accouplement ( 186) de sorte que trois parties de pliage triangulaires (184) du deuxième corps de couverture principal entourent de manière coopérative pour former une enceinte ayant une section transversale triangulaire ; cet appareil est configuré pour contenir une tablette ou un téléphone portable.

7. Un appareil selon la revendication 1, dans lequel le support (100) est pourvu d'une rainure de guidage de levage (102) s'étendant dans la direction de levage de la base de levage (120), et la base de levage (120) est montée dans la rainure de guidage de levage (102) de manière relevable ; les deux parois latérales de la rainure de guidage de levage (102) sont toutes deux pourvues de la structure d'accouplement de levage ( 160), et la base de levage (120) est pourvue de deux dispositifs de levage et de verrouillage (130) en correspondance biunivoque avec les deux structures d'accouplement de levage (160), la première tête d'insertion de l'élément de verrouillage transversal (131) du dispositif de levage et de verrouillage (130) est configurée pour être insérée dans la rainure d'insertion (161) de la structure d'accouplement de levage correspondante (160).

8. Un appareil selon la revendication 1, dans lequel la structure d'accouplement de levage ( 160) comprend plusieurs premières dents saillantes (162) disposées en séquence le long de la direction de levage de la base de levage (120), et une rainure d'insertion (161) est formée entre deux premières dents saillantes (162) adjacentes, une extrémité du premier ressort (133) est pressée contre une paroi de cavité d'une cavité mobile transversale (132), et l'autre extrémité du premier ressort (133) est pressée contre un élément de verrouillage transversal ( 131 ).

9. Un appareil selon la revendication 1, dans lequel l'ensemble de montage de produit électronique (110) comprend également un élément rotatif (140) monté de manière rotative sur la base de levage (120), et un dispositif de rotation et de verrouillage (150) configuré pour verrouiller l'élément rotatif (140) sur la base de levage (120) ; et l'élément de montage ( 190) est fixé à l'élément rotatif (140).

10. Un appareil selon la revendication 9, dans lequel l'un de la base de levage (120) et de l'élément rotatif (140) est pourvu d'une structure d'accouplement rotative ( 170), et l'autre de la base de levage ( 120) et de l'élément rotatif ( 140) est pourvu d'un dispositif de rotation et de verrouillage ( 150), le dispositif de rotation et de verrouillage ( 150) comprend une cavité de montage (151 ), et un deuxième ressort (153) disposé dans la cavité de montage ( 151) et butant contre l'élément de verrouillage mobile ( 152), dans lequel l'élément de verrouillage mobile (152) est formé d'une deuxième tête d'insertion, la structure d'accouplement rotative ( 170) comprend plusieurs rainures de verrouillage ( 171) disposées circonférentiellement autour d'un axe de rotation de l'élément rotatif (140), la deuxième tête d'insertion est insérable dans les rainures de verrouillage (171).

11. Un appareil selon la revendication 10, dans lequel la structure d'accouplement rotative (170) est prévue sur l'élément rotatif (140), et le dispositif de rotation et de verrouillage (150) est prévu sur la base de levage (120) ; la structure d'accouplement rotative (170) comprend plusieurs deuxièmes dents saillantes (172) disposées dans une direction circonférentielle autour d'un axe de rotation de l'élément rotatif (140), une rainure de verrouillage (171) est formée entre deux deuxièmes dents saillantes (172) adjacentes ; une extrémité du deuxième ressort (153) bute contre la paroi de cavité de la cavité de montage ( 151 ), et l'autre extrémité de celui-ci bute contre l'élément de verrouillage mobile (152) ; l'élément de montage (190) est un cadre de protection.
